(19) Europäisches Patentamt
European Patent Office
Office européen des brevets

(11) EP 3 480 033 B1

(12) EUROPEAN PATENT SPECIFICATION

(45) Date of publication and mention of the grant of the patent:
**07.04.2021 Bulletin 2021/14**

(21) Application number: **17820581.1**

(22) Date of filing: **30.06.2017**

(51) Int Cl.:
***B60C 9/14*** *(2006.01)* ***B60C 9/00*** *(2006.01)*
***B60C 9/02*** *(2006.01)* ***B60C 5/14*** *(2006.01)*
***B29D 30/06*** *(2006.01)*

(86) International application number:
**PCT/KR2017/006977**

(87) International publication number:
**WO 2018/004305 (04.01.2018 Gazette 2018/01)**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2016 KR 20160082992**

(43) Date of publication of application:
**08.05.2019 Bulletin 2019/19**

(73) Proprietor: **Kolon Industries, Inc.**
**Seoul 07793 (KR)**

(72) Inventors:
- **CHOI, Song-Yeon**
  **Yongin-si**
  **Gyeonggi-do 16910 (KR)**
- **CHUNG, Il**
  **Yongin-si**
  **Gyeonggi-do 16910 (KR)**

(74) Representative: **Ter Meer Steinmeister & Partner Patentanwälte mbB**
**Nymphenburger Straße 4**
**80335 München (DE)**

(56) References cited:
**EP-A1- 2 042 296**
**EP-A1- 2 123 479**
**EP-A1- 2 848 430**
**JP-A- 2013 086 460**
**KR-A- 20080 098 453**
**KR-A- 20120 052 163**
**KR-A- 20140 081 075**
**KR-A- 20160 038 844**
**KR-A- 20160 038 844**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

CROSS-REFERENCE TO RELATED APPLICATION

The present invention relates to a pneumatic tire, more specifically to a pneumatic tire that exhibits high durability and fatigue resistance against repeated strains, thus preventing the structural deformation or deterioration of the mechanical properties of a tire, and can make a tire light-weighted while securing higher air barrier property, thus improving fuel efficiency.

### BACKGROUND OF THE INVENTION

A tire withstands the weight of an automobile, reduces impact from the road, and transfers the driving force or braking force of an automobile to the ground. Recently, a tubeless tire where high pressure air of 30 to 40 psi is injected is commonly used without using a tube, and to prevent air leakage during automobile running, an inner liner having high air barrier property is positioned as the inner layer of the carcass.

In the running process of an automobile, repeated strains may be applied to a tire or high temperature heat may be generated inside a tire, and thus, each constructional part of a tire may be physically deformed or separated, or the physical/chemical properties may be significantly deteriorated. Particularly, a stress according to the strain during automobile running or the high temperature heat is concentrated in the shoulders or sidewalls of a tire, and thus, the inner liner inside a tire may be deformed or damaged, or crystallization due to high temperature or deterioration of elasticity may occur, rendering it difficult to exhibit appropriate air barrier or internal pressure retention, etc.

And previously, a tire inner liner including rubber such as butyl rubber or halo butyl rubber, and the like having relatively low air permeability as a main ingredient was used, but since the rubber ingredients have relatively low heat resistance, air pocket may be generated between rubber in the inner surface of a body ply and the inner liner, or the shape or physical property of the inner liner may be changed in an automobile running process.

Thus, methods of modifying the structure of the shoulder of a pneumatic tire, or installing a reinforcement layer inside the sidewall, etc. have been suggested, but according to these methods, it became difficult to decrease the thickness and weight of a tire, and it was difficult to sufficiently solve the problems caused by a stress according to a strain during automobile running or high temperature heat.

Therefore, there is a demand for the development of a pneumatic tire that can make a tire light-weighted, and simultaneously, can sufficiently secure excellent durability, fatigue resistance and mechanical properties, etc.

### [DETAILED DESCRIPTION OF THE INVENTION]

### [TECHNICAL PROBLEM]

It is an object of the present invention to provide a pneumatic tire that exhibits high durability and fatigue resistance against repeated strain, thus preventing the structural deformation or deterioration of the mechanical properties of a tire, and can make a tire light-weighted while securing higher air barrier property, thus improving fuel efficiency.

### [TECHNICAL SOLUTION]

The present invention provides a pneumatic tire comprising: a tread;
one pair of shoulders respectively continued to both sides with the tread as a center;
one pair of sidewalls respectively continued to the shoulders;
one pair of beads respectively continued to the sidewalls;
a body ply formed on the inner sides of the tread, shoulders, sidewalls and beads;
a belt and a cap ply sequentially stacked between the inner side of the tread and the body ply; and
an inner liner bonded to the inner side of the body ply,
wherein in the inner liner, a sheet including a rubber component positioned at the part of the body ply corresponding to the shoulders and the sidewalls, and a polymer film including a polyamide-based component positioned at the part of the body ply corresponding to the tread, the polymer film including a polyamide-based component including a polyamide-based resin and two or more kinds of copolymers including polyamide-based segments and polyether-based segments.

Hereinafter, a pneumatic tire according to specific embodiment of the invention will be explained in detail.

According to one embodiment of the invention, a pneumatic tire is provided, which comprises a tread; one pair of shoulders respectively continued to both sides with the tread part as a center; one pair of sidewalls respectively

continued to the shoulders; one pair of beads respectively continued to the sidewalls; a body ply formed on the inner sides of the tread, shoulders, sidewalls and beads; a belt and a cap ply sequentially stacked between the inner side of the tread and the body ply; and an inner liner bonded to the inner side of the body ply, wherein in the inner liner, a sheet including a rubber component is positioned at the part of the body ply corresponding to the shoulders and the sidewalls, and a polymer film including a polyamide-based component is positioned at the part of the body ply corresponding to the tread.

The present inventors progressed studies on the structure of a pneumatic tire and materials for an inner liner, and prepared a pneumatic tire in which the above explained polymer film including a polyamide-based component is positioned on the inner side of a tread where the air inside is mainly discharged outside, and the sheet including a rubber component is positioned at the part of the body ply corresponding to the shoulders and sidewalls of a tire where most strains are generated during running.

Such a pneumatic tire can act as a buffer against repeated strains, thus realizing high durability and fatigue resistance, without a change or reinforcement of a structure for reinforcing shoulders or sidewalls, and can prevent the structural deformation or deterioration of the mechanical properties of a tire.

Particularly, as explained above, in the pneumatic tire, the polymer film including a polyamide-based component is positioned at the part of the body ply corresponding to the tread, and thus, the pneumatic tire exhibits excellent air barrier property, for example, air barrier property of 10 to 20 times of butyl rubber commonly used in a tire with the same thickness, due to the unique molecular chain property of the polyamide-based component, and exhibits a modulus that is not so high compared to other polymers, and thus, can secure higher air barrier property while exhibiting high durability and fatigue resistance against repeated strains, and simultaneously, make a tire light-weighted, thus improving the fuel efficiency of an automobile.

As explained above, in the pneumatic tire, the above explained polymer film including a polyamide-based component is positioned on the inner side of a tread where the air inside is mainly discharged outside, and the sheet including a rubber component is positioned at the part of the body ply corresponding to the shoulders and sidewalls of a tire where most strains are generated during running, and thus, such a pneumatic tire of one embodiment has relatively low rolling resistance compared to previously known inner liners (for example, inner liners made of butyl/natural rubber, etc. or inner liners including only thermoplastic resin, etc.), and thus, if the pneumatic tire is used, the fuel efficiency of an automobile can be significantly improved.

More specifically, rolling resistance is a force that is given to the opposite direction of the direction of progression of a tire, and it is generated for three reasons including tire strain due to elasticity and viscosity, frictional resistance between a tire and a road (impact, against slip), and resistance that deforms a road. The most reason for the rolling resistance is an internal loss due to tire strain, and when a tire contacts a road, a part thereof is consumed as heat energy, and hysteresis loss is generated, thus increasing the rolling resistance. Thus, it is considered that when other conditions relating to a tire are fulfilled, the lower the rolling resistance, more improved the fuel efficiency.

Meanwhile, the 'part of the body ply corresponding to the shoulders and sidewalls' means the inner side(the inward direction of a tire) of a body ply with which the shoulders and sidewalls of a pneumatic tire contact.

The 'part of the body ply corresponding to the tread' means the inner side(the inward direction of a tire) of a body ply with which the tread of a pneumatic tire contacts.

The sidewall is a part from the point where a bead at the end of a pneumatic tire ends to the shoulder, and the shoulder is a part from the upper end of the side wall to the end of a tread, and the locations and sizes of such shoulders and sidewalls may be determined by the cross-section width of a pneumatic tire, an aspect ratio and the diameter of a rim, etc.

In a common pneumatic tire, the position of the part of the body ply corresponding to the shoulders and sidewalls may vary according to the shape or design of a tire, and commonly, it may correspond to a point of 5% to 40%, preferably 10% to 37% of the total length, from one end of the inner liner film.

The pneumatic tire is a composite of fiber/steel/rubber, and as shown in Fig. 1, it may comprise a tread, a body ply, a belt, a sidewall, an inner liner, a bead and a cap ply, etc.

The tread(1) is a part contacting the road, and it provides a frictional force required for braking and driving, and absorbs external impact. On the surface of the tread, certain grooves are formed, thus exhibiting the functions such as control stability, traction power, braking performance, draining, etc.

The shoulders(2) are structural parts respectively continued to both sides of the tread with the tread as a center, and they are respectively positioned between both ends of the tread and the upper ends of the sidewalls.

The sidewalls(3) are structural parts respectively continued to the shoulders, refer to a rubber layer between a part below the shoulder(2) and a bead(9), and protects the body ply(6) inside.

The beads(9) are structural parts respectively continued to the sidewalls, and they are square or hexagonal wire bundle formed of rubber-coated steel wire, and function for positioning and fixing a tire in a rim.

The body ply(6) (or carcass) is formed on the inner side of the tread, shoulders, sidewalls and beads, functions as a backbone of a tire withstanding the load of an automobile, and has a structure in which a tire cord is included in a

certain rubber component. Specifically, the body ply may include one or more rubber components selected from the group consisting of synthetic rubber and natural rubber in the content of 30wt% or more, and may include one or more tire cords. As such a tire cord, various natural fibers or rayon, nylon, polyester, or keblar, etc. may be used, and a steel cord formed by twisting a very thin steel wire may be used.

The belt(5) is positioned between the inner side of the tread and the body ply, mostly consists of steel wire, and it not only mitigates external impact but also maintains the contact area of the tread wide, thus securing running stability.

The cap ply(4) is a special cord paper positioned between the inner side of the belt and the body ply, and functions for minimizing the movement of the belt during running.

The inner liner(7) is positioned inside a tire instead of a conventional tube, and functions for preventing air leakage.

The pneumatic tire may further comprise APEX, and such an APEX(8) functions for minimizing the dispersion of a bead, mitigating external impact to protect the bead, and preventing the inflow of the air during molding, and in general, it is triangle rubber filler.

Meanwhile, as explained above, the pneumatic tire comprises an inner liner bonded to the inner side of the body ply, and in the inner liner, a sheet including a rubber component may be positioned at the part of the body ply corresponding to the shoulder and sidewalls, and a polymer film including a polyamide-based component may be positioned at the part of the body ply corresponding to the tread.

Specifically, according to one example of the pneumatic tire of one embodiment, on the basis of the cross section of the tread in the width direction, a polymer film including a polyamide-based component may contact with the part of the body ply corresponding to the tread, and a sheet including a rubber component may be stacked such that it may contact with the part of the body ply corresponding to the shoulders and the sidewalls, and one side of the polymer film including a polyamide-based component of the inward direction of the pneumatic tire. The approximate structure of the cross section of such a pneumatic tire is as shown in Fig. 2.

And, according to one example of the pneumatic tire of one embodiment, the sheet including a rubber component may contact with the part of the body ply corresponding to the tread, shoulders and sidewalls, and the polymer film including a polyamide-based component may be stacked on the opposite side of one side of the sheet including a rubber component that contacts with 'the part of the body ply corresponding to the tread'.

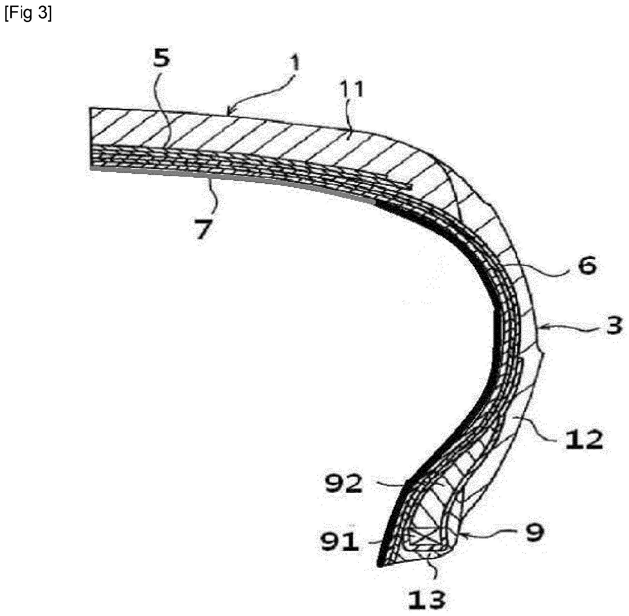

And, according to another example of the pneumatic tire of one embodiment, on the basis of the cross section of the tread in the width direction, sheets including rubber components may be respectively bonded to both ends of the polymer film including a polyamide-based component. In this case, on the basis of the cross section of the tread in the width direction, the overlapped length between the end of the polymer film including a polyamide-based component and the sheet including a rubber component may be 10mm to 60mm. The approximate structure of the cross section of such a pneumatic tire is as shown in Fig. 3.

In case the sheets including rubber components are respectively bonded to both ends of the polymer film including a polyamide-based component, the sheets including rubber components may be bonded to both ends of the polymer film including a polyamide-based component, through commonly known tie gum, etc.

For example, as the tie gum, tie gum including 10 to 60 wt% of butyl-based rubber may be used. Due to the compositional characteristic of such tie gum, during running of an automobile in which a tire equipped with the finally prepared inner liner is installed, air leakage through a splice or fracture around a splice may be prevented.

If the content of the butyl-based rubber included in the tie gum is less than 10wt%, it may be difficult to prevent air leakage through a splice during running of an automobile in which a tire equipped with the finally prepared inner liner is installed, and thus, due to rapid decrease in the internal pressure during running of a tire, tire strain may increase and fuel efficiency may be significantly lowered. And, if the content of the butyl-based rubber included in the tie gum is greater than 60wt%, adhesion property of the tie gum and adhesive force with an inner liner film may be deteriorated, and thus, destruction or separation of the splice may be generated during the manufacture and running of a tire, and due to the deterioration of the mechanical properties of the tie gum, cracks and fractures may be generated in vulcanized tie gum.

The splice means a part where both ends of the polymer film including a polyamide-based component and the sheet including a rubber component are bonded or overlapped.

As explained above, the overlapped length between the end of the polymer film including a polyamide-based component and the sheet including a rubber component may be 10mm to 60mm, namely, the length of the splice in the circumferential direction of a tire or in the circumferential direction of a tire molding drum may be 10 mm to 60 mm.

If the length of the splice of the circumferential direction of a tire or of the circumferential direction of a tire molding drum is too short, sufficient adhesion force between films may not be provided during the manufacture of a tire, and thus, the splice may be ruptured in the expansion process during molding, and in the finally manufactured pneumatic tire, the high pressure air inside may be easily discharged outside along with the short splice, which is unfavorable in terms of technology.

And, if the length of the splice of the circumferential direction of a tire or of the circumferential direction of a tire

molding drum is too long, the weight of a tire may increase, and thus, the weight reduction effect according to the application of films may decrease, and during running of an automobile equipped with the finally manufactured pneumatic tire, stress or strain may be focused on the splice, thus increasing noise and vibration during running, and increasing the possibility of fracture generation, which is unfavorable in terms of technology.

As explained above, in case the sheets including a rubber component are bonded to both ends of the polymer film including a polyamide-based component, the sheets including a rubber component may be bonded to both ends of the same side of the polymer film including a polyamide-based component, wherein one side of the polymer film including a polyamide-based component to which the sheets including rubber components are bonded may face the inner side of the pneumatic tire of one embodiment (the opposite side of the one side contacts with the part of the body ply corresponding to the tread), or one side of the polymer film including a polyamide-based component to which the sheets including rubber components are bonded may contact with the part of the body ply corresponding to the tread.

Meanwhile, the tie gum may have a thickness of 0.1 mm to 2mm. If the thickness of the tie gum is too thick, in the finally manufactured pneumatic tire, the high pressure air inside may be easily discharged outside along with the widened splice, and during tire molding and vulcanization processes, the tie gum of the splice may be pushed due to high temperature and pressure, and the formation of the uniform shape of a tire may be hindered. And, if the thickness of the tie gum is too thin, during tire molding and vulcanization processes, adhesion force for bonding films may be lowered, and thus, the films may be ruptured, rendering tire manufacture difficult, and during running of an automobile equipped with the finally manufactured tire, the splice may be easily damaged, and due to the property of the tie gum, it may be difficult to prepare uniformly thin tie gum due to elastic recovery.

Meanwhile, the tie gum may include 10 to 60 wt% of butyl-based rubber, 10 to 70wt% of other rubber components, and 1 to 30 wt% of additives.

As the butyl-based rubber, butyl-based rubber known to be usable in a tire or in tie gum used in a tire may be used, and specifically, halogenated butyl rubber(X-IIR) such as brominated butyl rubber(Br-IIR), chlorinated butyl rubber(Cl-IIR), etc. or non-halogenated butyl rubber(IIR), etc. may be used.

The other rubber components mean rubber components other than the butyl-based rubber, and specific examples of the other rubber components may include natural ruber(NR), isoprene rubber(IR), styrene butadiene rubber(SBR), butadiene rubber(BR), epoxidized natural rubber(ENR), styrene-isoprene-butadiene copolymer rubber(SIBR), or mixtures of two or more kinds thereof.

The additives may include one or more selected from the group consisting of inorganic filler, a tackifier, an antioxidant, a vulcanization accelerator, and oil. As the inorganic filler, carbon black or silica, etc. may be used. And, as the tackifier, non-reactive phenol resin, aromatic hydrocarbon resin, aliphatic hydrocarbon resin, or mixtures of two or more kinds thereof may be used.

Meanwhile, the sheet including a rubber component and the polymer film including a polyamide-based component may be respectively prepared, and then, stacked on or bonded to the above explained pneumatic tire, and the sheet including a rubber component and the polymer film including a polyamide-based component may be prepared in the form of a composite in one molding drum, etc. For example, one of the sheet including a rubber component and the polymer film including a polyamide-based component may be covered on a molding drum, and the other sheet or film may be stacked so as to overlap thereon, thus preparing the above explained composite.

The sheet including a rubber component may include one or more selected from the group consisting of synthetic rubber including butyl rubber or halobutyl rubber and natural rubber.

Specifically, the sheet including a rubber component may include butyl-rubber known to be usable in a tire, and specifically, it may include halogenated butyl rubber such as brominated butyl rubber(Br-IIR), chlorinated butyl rubber(X-IIR), etc., non-halogenated butyl rubber(IIR), etc., and further include other rubber components. The other rubber components mean rubber components other than the butyl-based rubber, and specific examples of the other rubber components may include natural rubber(NR), isoprene rubber(IR), styrene-butadiene rubber(SBR), butadiene rubber(BR), epoxidized natural ruber(ENR), styrene-isoprene-butadiene copolymer rubber(SIBR) or mixtures of two or more kinds thereof.

More specifically, the rubber component may include 50 to 90 wt% of halobutyl rubber and 10 to 50 wt% of butyl rubber.

And, the sheet including a rubber component may further include a coloring agent or other additives, in addition to the above explained rubber components. For example, the sheet including a rubber component may further include 20 to 200 parts by weight of a coloring agent such as carbon black, etc., based on 100 parts by weight of the rubber components, and may further include an antioxidant or other additives such as lubricant, etc.

The thickness of the sheet including a rubber component may be 0.1 mm to 5 mm or 0.5 mm to 2 mm. For example, if the thickness of the sheet including a rubber component is too thin, the amount of gas discharged in the inner liner may become excessively large, and a performance for maintaining internal pressure for a long time may be deteriorated. And, if the thickness of the sheet including a rubber component is too thick, the elasticity of the pneumatic tire may be deteriorated, and the tire may become excessively heavy, thus lowering the fuel efficiency of an automobile.

Meanwhile, the polymer film including a polyamide-based component includes one or more compounds selected from the group consisting of polyamide-based resin; and copolymer including polyamide-based segment and polyether-based segments. More specifically, the polymer film including a polyamide-based component includes polyamide-based resin; and copolymer including polyamide-based segment and polyether-based segments.

The polyamide-based resin may have a relative viscosity of 2.5 to 4.0, or 3.2 to 3.8 (sulfuric acid 96% solution). If the relative viscosity of the polyamide-based resin is less than 2.5, due to decrease in toughness, sufficient elongation may not be secured, and thus, damage may be generated during the manufacture of a tire or automobile running, and the speed of crystallization to heat may become fast, and thus, the effect of delaying crystallization through brittleness of the polymer film including a polyamide-based component may not be sufficiently achieved. If the relative viscosity of the polyamide-based resin is greater than 4.0, the modulus or viscosity of the polymer film including a polyamide-based component may become unnecessarily high, the efficiency and economical feasibility of the manufacture process may be lowered, a tire inner liner may not have appropriate moldability or elasticity, and the compatibility with copolymer including polyamide-based segments and polyether-based segments may be deteriorated to cause property nonuniformity of the polymer film including a polyamide-based component.

The relative viscosity of the polyamide-based resin refers to relative viscosity measured using a sulfuric acid 96% solution at room temperature. Specifically, a specimen of polyamide-based resin (for example, 0.025 g specimen) is dissolved in a sulfuric acid 96% solution at various concentrations to prepared two or more measurement solutions (for example, a polyamide-based resin specimen is dissolved in 96% sulfuric acid to concentrations of 0.25g/dL, 0.10g/dL, 0.05 g/dL to prepare 3 measurement solutions), and then, the relative viscosity of the measurement solutions (for example, the ratio of the average passing time of the measurement solutions to the passing time of the sulfuric acid 96% solution through a viscosity tube) may be obtained using a viscosity tube at 25°C.

Specific examples of the polyamide-based resin may include nylon 6, nylon 66, nylon 46, nylon 11, nylon 12, nylon 610, nylon 612, copolymer of nylon 6/66, copolymer of nylon 6/66/610, nylon MXD6, nylon 6T, copolymer of nylon 6/6T, copolymer of nylon 66/PP and copolymer of nylon 66/PPS; or N-alkoxy alkylate thereof, for example, methoxy methylate of 6-nylon, methoxy methylate of 6-610-nylon or methoxy methylate of 612-nylon, and nylon 6, nylon 66, nylon 46, nylon 11, nylon 12, nylon 610 or nylon 612 may be preferably used.

Meanwhile, the copolymer including polyamide-based segments and polyether-based segments may have a weight average molecular weight of 30,000 to 500,000, or 70,000 to 300,000. Throughout the specification, the weight average molecular weight means a weight average molecular weight converted in terms of polystyrene, measured by a GPC method.

If the weight average molecular weight of the copolymer is less than 30,000, the polymer including a polyamide-based component may not secure mechanical properties sufficient for use as an inner liner, and if the weight average molecular weight of the copolymer is greater than 500,000, when heated to a high temperature, the modulus or crystallization degree of the polymer film including a polyamide-based component may excessively increase, and thus, it may be difficult for the polymer film including a polyamide-based component to secure elasticity or elasticity recovery rate required as an inner liner.

The polyamide-based segments of the copolymer may include the repeat units of the following Chemical Formula 11 or Chemical Formula 12.

[Chemical Formula 11]

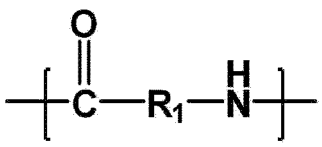

In the Chemical Formula 11, $R_1$ is a C1-20 linear or branched alkylene group, a C6-20 aylene group, or a C7-20 linear or branched aylalkylene group.

[Chemical Formula 12]

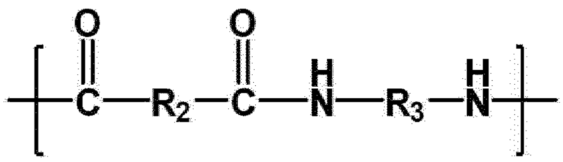

In the Chemical Formula 12, $R_2$ is a C1-20 linear or branched alkylene group, or a C6-20 arylene group, $R_3$ is a C1-20 linear or branched alkylene group, a C6-20 arylene group, or a C7-20 linear or branched arylalkylene group.

Meanwhile, the polyether-based segment of the copolymer means a repeat unit including an alkylene oxide (-Akyl-O-) group, and it may be formed from polyether-based resin participating in a polymerization reaction or a precursor thereof.

The polyether-based segments of the copolymer may be the main repeat units that can be included in polyalkylene glycol resin or a derivative thereof, wherein the polyalkylene glycol derivative may be a derivative in which the end of polyalkylene glycol resin is substituted with an amine group, a carboxylic group or an isocyanate group, etc., preferably with an amine group. Preferably, the polyether-based segments of the copolymer may be the main repeat units included in polyether-based resin selected from the group consisting of polyethylene glycol, polypropylene glycol, polytetramethylene glycol, polyoxyethylene diamine, polyoxypropylene diamine, polyoxytetramethylene diamine and copolymers thereof.

And, polyether-based segment of the copolymer may include repeat units of the following Chemical Formula 13.

[Chemical Formula 13]

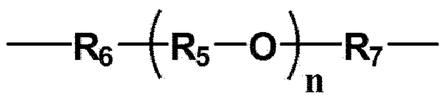

In the Chemical Formula 13, $R_5$ is a C1-10 linear or branched alkylene group, n is an integer of 1 to 100, and $R_6$ and $R_7$ may be identical to or different from each other, and each independently, a direct bond, -O-, -NH-, -COO- or-CONH-.

Throughout the specification, an 'alkylene' group means a divalent functional group derived from an alkyl group, an 'arylene' group means a divalent functional group derived from arene, and an 'arylalkylene' group means a divalent functional group derived from an alkyl group in which an aryl group is introduced.

Meanwhile, the content of the polyether-based segments may be 2 to 40 wt%, or 3 to 35 wt%, or 4 to 30 wt%, or 5 to 25 wt%, based on the total weight of the polymer film including a polyamide-based component.

If the content of the polyether-based segments is less than 2 wt% of the total polymer film including a polyamide-based component, the modulus of the polymer film including a polyamide-based component may increase, and thus, moldability may be lowered, or property deterioration according to repeated strain may significantly occur. If the content of the polyether-based segments is greater than 40 wt% of the total polymer film including a polyamide-based component, the air barrier property of the polymer film including a polyamide-based component may be deteriorated, and the elasticity of the polymer film including a polyamide-based component may increase, and thus, it may not be easy to prepare a uniform film.

Meanwhile, the polymer film including a polyamide-based component may comprise polyamide-based resin; and copolymer including polyamide-based segment and polyether-based segments at a ratio of 9:1 to 1:9 or 8:2 to 2:8.

The thickness of the polymer film including a polyamide-based component may be 2$\mu$m to 400$\mu$m, or 4$\mu$m to 200$\mu$m, or 10$\mu$m to 150$\mu$m.

Meanwhile, the polymer film including a polyamide-based component may further comprise one or more olefin-based polymer compounds selected form the group consisting of olefin-based polymer, olefin-based copolymer, and olefin-based polymer or copolymer grafted with dicarboxylic acid or acid anhydride thereof.

Specifically, the olefin-based polymer compound may perform functions for increasing softness of the polymer film including a polyamide-based component and absorbing the external impact, and it can significantly lower the modulus of the polymer film including a polyamide-based component, and simultaneously, prevent a change in the internal structure of the compound or polymer included in the polymer film including a polyamide-based component and the resulting crystallization.

The polymer film including a polyamide-based component may further comprise 0.1 wt% to 30 wt%, or 1 wt% to 25 wt% of the olefin-based polymer compound. If the content of the olefin-based polymer compound is too small, the actions and effects resulting from the olefin-based polymer compound may be insignificant. And, if the content of the olefin-based polymer compound is too large, the properties or effects obtained by the polyamide-based resin and the

copolymer may be reduced, and when the polymer film including a polyamide-based component is applied as an inner liner film to manufacture a tire, air barrier property may be deteriorated.

The olefin-based polymer compound may include olefin-based polymer, olefin-based copolymer, olefin-based polymer or copolymer grafted with dicarboxylic acid or acid anhydride thereof, or mixture of two or more kinds thereof.

The olefin-based polymer may include polyethylene, polypropylene or a mixture thereof.

The olefin-based copolymer may include ethylene-propylene copolymer.

As explained above, the olefin-based polymer compound may also include olefin-based polymer or copolymer grafted with dicarboxylic acid or acid anhydride thereof, wherein the dicarboxylic acid may include maleic acid, phthalic acid, itaconic acid, citraconic acid, alkenyl succinic acid, cis-1,2,3,6 tetrahydrophthalic acid, 4-methyl-1,2,3,6-tetrahydrophthalic acid or mixtures of two or more kinds thereof, and dianhydride of the dicarboyxlic acid may be dicarboxylic dianhydride of the above described compounds.

In the olefin-based polymer or copolymer grafted with dicarboxylic acid or acid anhydride thereof, the content of grafted dicarboxylic acid or acid anhydride thereof may be 0.05wt% or more, preferably 0.1 to 50 wt%, or 0.5 to 10 wt%.

The graft rate of such dicarboxylic acid or acid anhydride thereof may be measured from the result obtained by the acid-base titration of the olefin-based polymer compound. For example, about 1 g of the olefin-based polymer compound is put in 150mℓ of xylene and the solution is refluxed for about 2 hours, and then, a small amount of a 1wt% thymol blue-dimethylformamide solution is added, and a deep blue solution is obtained by slightly excessive titration with a 0.05N sodium hydroxide-ethylalcohol solution, and then, the solution is back-titrated with a 0.05N hydrochloric acid-isopropylalcohol solution until a yellow color appears, thus calculating an acid value, and the amount of dicarboxylic acid grafted on the olefin-based polymer compound may be calculated therefrom.

The olefin-based polymer compound may have a density of 0.77g/cm$^3$ to 0.95 g/cm$^3$, or 0.80g/cm$^3$ to 0.93 g/cm$^3$.

Meanwhile, the polymer film including a polyamide-based component may be bonded to the inside of the body ply through an adhesion layer comprising resorcinol-formalin-latex(RFL)-based adhesive and having a thickness of 0.1 to 20 $\mu$m.

Specifically, the resorcinol-formalin-latex(RFL)-based adhesive may comprise 2 to 32 wt%, preferably 10 to 20 wt% of the condensation product of resorcinol and formaldehyde, and 68 to 98 wt%, preferably 80 to 90 wt% of latex.

The condensation product of resorcinol and formaldehyde may be obtained by mixing resorcinol and formaldehyde at a mole ratio of 1:0.3 to 1:3.0, preferably 1:0.5 to 1:2.5, and then, progressing a condensation reaction. And, the condensation product of resorcinol and formaldehyde may be included in an amount of 2 wt% or more, based on the total amount of the adhesion layer, in terms of chemical reactions for obtaining excellent adhesive force, and may be included in an amount of 32 wt% or less so as to secure appropriate fatigue resistance.

The latex may be selected from the group consisting of natural rubber latex, styrene/butadiene rubber latex, acrylonitrile/butadiene rubber latex, chloroprene rubber latex, styrene/butadiene/vinylpyridine rubber latex, and a mixture of two or more kinds thereof. The latex may be included in an amount of 68 wt% or more, based on the total amount of the adhesion layer, for the flexibility of the material and effective crosslinking reaction with rubber, and may be included in an amount of 98 wt% or less for a chemical reaction with a substrate film and the rigidity of the adhesion layer.

The adhesion layer may have a thickness of 0.1 to 20 $\mu$m, preferably 0.1 to 7$\mu$m, more preferably 0.2 to 5 $\mu$m, even more preferably 0.3 to 3 $\mu$m.

And, the adhesion layer comprising resorcinol-formalin-latex(RFL)-based adhesive and having a thickness of 0.1 to 20 $\mu$m may be formed on one side or both sides of the polymer film including a polyamide-based component, and thus, the polymer film including a polyamide-based component and the sheet including a rubber component may be bonded through the adhesion layer, and using the adhesion layer, the two films may be bonded to the inside of the body ply.

Meanwhile, the polymer film including a polyamide-based component may further comprise one or more selected from the group consisting of a crosslinking agent and a heat resistant agent.

If the polymer film including a polyamide-based component further comprises a crosslinking agent, the crystallinity or tendency to crystallize at high temperature of the polymer film including a polyamide-based component may be lowered. Specifically, by using the crosslinking agent, polymer used or synthesized in the preparation process of the polymer film including a polyamide-based component, for example, polyamide-based resin(a) and copolymer including polyamide-based segments and polyether-based segments(b), may be crosslinked respectively or with each other, and thus, the crystallinity of the polymer film including a polyamide-based component may be lowered.

The polymer film including a polyamide-based component may comprise 0.05wt% to 2wt%, or 0.2wt% to 1wt% of the crosslinking agent. If the content of the crosslinking agent is too small, the degree of crosslinking between the polymers included in the polymer film including a polyamide-based component may not be sufficient, and thus, the crystallinity may not be sufficiently lowered. If the content of the compound including an oxazoline functional group is too high, the compatibility with other components included in the polymer film including a polyamide-based component may be lowered, and thus, the properties of the inner liner film may be deteriorated, or the crosslinking in the polymer film including a polyamide-based component may be generated a lot unnecessarily, and thus, the elasticity may be deteriorated.

Meanwhile, the polymer film including a polyamide-based component may further comprise a heat resistant agent. If the polymer film including a polyamide-based component further comprises a heat resistant agent, the crystallinity of the polymer may be significantly lowered, and thus, even if left or exposed under a high temperature environment for a long time, the properties may not be significantly deteriorated. Namely, if a heat resistant agent is added to the polymer film including a polyamide-based component, even in a tire molding process, the crystallization or curing to high degree of the polymer film including a polyamide-based component may be remarkably reduced, and even in an automobile running process during which repeated strains are applied and high temperature is generated, cracks or damages of the inner liner may be prevented.

And, the polymer film including a polyamide-based component may comprise 0.05wt% to 2.00wt%, or 0.10 to 1.00 wt% of the heat resistant agent. If the content of the heat resistant agent is too small, the heat resistance improvement effect may be insignificant. And, if the content of the heat resistant agent is too large, the properties of the polymer film including a polyamide-based component may be deteriorated, and the heat resistance improvement effect according to the content used may not be substantially obtained, and thus, the cost of the final product may be increased unnecessarily.

Specific examples of the heat resistant agent may include an aromatic amine-based compound, a hindered phenolic compound, a phosphorus compound, an inorganic compound, a polyamide-based compound, a polyether-based compound, or mixtures of two or more kinds thereof.

**[ADVANTAGEOUS EFFECTS]**

According to the present invention, a pneumatic tire that exhibits high durability and fatigue resistance to repeated strains, thus preventing the deformation of the structure or the deterioration of the mechanical properties of a tire, and simultaneously, can secure higher air barrier property and make a tire light-weighted, thus improving the fuel efficiency of an automobile, can be provided.

**[BRIEF DESCRIPTION OF THE DRAWINGS]**

Fig. 1 schematically shows the structure of a pneumatic tire.

Fig. 2 schematically shows the cross-section of a pneumatic tire according to one embodiment of the present invention.

Fig. 3 schematically shows the cross-section of a pneumatic tire according to one embodiment of the present invention.

**[DETAILED DESCRIPTION OF THE EMBODIMENTS]**

Hereinafter, the present invention will be explained in detail through the following examples. However, these examples are presented only as the illustrations of the present invention, and the scope of the present invention is not limited thereby.

**<Preparation Example>**

**Preparation Example 1. Preparation of a polymer film including a polyamide-based component**

(1) Preparation of a substrate film Polyamide-based resin with a relative viscosity of 3.3 (sulfuric acid 96% solution), prepared from ε-caprolactam (nylon 6), copolymer resin having a weight average molecular weight of about 105,000(including 25wt% of polyether-based segments having a polytetramethylene oxide main chain, and 75wt% of polyamide-based segments derived from ε-caprolactam), and copolymer resin having a weight average molecular weight of about 115,000(synthesized using 25wt% of polyether-based segments having a poly(iso-propylene)oxide main chain with an amine end group, and 75wt% of polyamide-based segments derived from ε-caprolactam) were mixed at a weight ratio of 5:2.5:2.5, and a crosslinking agent of styrene 2-isopropenyl-2-oxazoline copolymer and a heat resistant agent [a mixture of copper iodide and potassium iodide - content of Cu in the mixture is 7 wt%] were added thereto, thus preparing a mixture for preparing a polymer film including a polyamide-based component. The content of the crosslinking agent in the mixture was 0.5wt%, and the content of the heat resistant agent was 0.3 wt%.

And, the mixture was extruded while maintaining uniform flow of molten resin, through a T-type die(die gap -

1.0 mm) at 260 °C, and the molten resin was cooled and solidified to a film with a uniform thickness, using an air knife, on the surface of a cooling roll adjusted to 25°C. And, an undrawn polymer film including a polyamide-based component with a thickness of 100um was obtained without passing through drawing and heat treatment sections at the velocity of 15m/min.

(2) **Formation of an adhesion layer**

Resorcinol and formaldehyde were mixed at a mole ratio of 1:2, and then, the mixture was subjected to a condensation reaction to obtain the condensation product of resorcinol and formaldehyde. 12 wt% of the condensation product of resorcinol and formaldehyde and 88 wt% of styrene/butadiene-1,3/vinylpyridine latex were mixed to obtain resorcinol-formalin-latex(RFL)-based adhesive of the concentration of 20%. And, the resorcinol-formalin-latex(RFL)-based adhesive was coated on both sides of the undrawn polymer film including a polyamide-based component using a gravure coater, and dried and reacted at 150 °C for 1 minute to form an adhesion layers respectively with a thickness of 2 $\mu$m on both sides.

**Preparation Example 2. Preparation of a film using butyl rubber and natural rubber(NR)**

100 parts by weight of raw material rubber including 60wt% of butyl rubber and 40wt% of natural rubber, 30 parts by weight of carbon black, 3 parts by weight of paraffin oil, 2 parts by weight of zinc oxide, 1 part by weight of stearic acid, 2 parts by weight of an anti-ageing agent, 1 part by weight of sulfur, and 1 part by weight of a vulcanization accelerator were put in a mixer, and the mixture was vulcanized at 160°C for 20 minutes, thus preparing a rubber film with a uniform thickness.

**[Example: Preparation of a pneumatic tire]**

**<Example 1>**

Using the polymer film prepared in Preparation Example 1 and the rubber film prepared in Preparation Example 2, a 205R/75R15 standard tire was manufactured, and evaluated. As a cord included in a body ply, a 1300De'/2ply HMLS tire cord was applied, and as a belt, a steel cord was used, and as a cap ply, a N66 840De'/2ply product was applied.

Specifically, the rubber film prepared in Preparation Example 2(thickness: 1.00mm) was covered on a tire molding drum, and the polymer film including a polyamide-based component of Preparation Example 1 was overlapped on the part of a body ply corresponding to a tread, and then, the overlapped part was fixed with a tie gum having a thickness of 1 mm so as to fix the polymer film.

And, on the inner liner film, rubber for a body ply was stacked, rubber layers for the formations of a bead wire; a belt; a cap ply; and a tread, shoulders and sidewalls were sequentially formed to manufacture a green tire.

The manufactured green tire was put in a mold, and a tire was manufactured through vulcanization at 160°C for 30 minutes.

**<Example 2>**

A pneumatic tire was manufactured by the same method as Example 1, except that the thickness of the rubber film prepared in Preparation Example 2 was changed to 0.60mm.

< **Example 3>**

A pneumatic tire was manufactured by the same method as Example 1, except that 1) the thickness of the rubber film prepared in Preparation Example 2 was changed to 1.2mm, and 2) the end of the polymer film including a polyamide-based component of Preparation Example 1 and the end of the rubber film prepared in Preparation Example 2 were overlapped by 20mm to form a splice.

**<Example 4>**

A pneumatic tire was manufactured by the same method as Example 1, except that 1) the thickness of the rubber film prepared in Preparation Example 2 was changed to 1.2mm, and 2) the end of the polymer film including a polyamide-based component of Preparation Example 1 and the end of the rubber film prepared in Preparation Example 2 were overlapped by 10mm to form a splice.

**<Example 5>**

A pneumatic tire was manufactured by the same method as Example 1, except that 1) the thickness of the rubber film prepared in Preparation Example 2 was changed to 1.2mm, and 2) the end of the polymer film including a polyamide-based component of Preparation Example 1 and the end of the rubber film prepared in Preparation Example 2 were overlapped by 5mm to form a splice.

**<Comparative Example 1>**

A pneumatic tire was manufactured by the same method as Example 1, except that the rubber film prepared in Preparation Example 2 (thickness 1.2 mm) was used alone.

**<Comparative Example 2>**

A pneumatic tire was manufactured by the same method as Example 1, except that the rubber film prepared in Preparation Example 2 (thickness 0.60 mm) was used alone.

**<Experimental Example: Measurement of the performances of pneumatic tires>**

**1. Measurement of durability**

Using a FMVSS139 tire durability measurement method, while increasing a load, the durability of a tire was tested and evaluated. Such a durability measurement was conducted by two methods of Endurance Test wherein a load is increased by a step load method, and High Speed Test wherein a speed is increased, and with the result of Comparative Example 1 as 100, the results of Examples and Comparative Examples were compared and evaluated.

**2. Measurement of internal pressure maintenance performance**

Using the tire inner liner films of Examples and Comparative Examples, 205R/65R16 tires were manufactured. And, the initial internal pressures of the manufactured tires were measured by the method of ASTM F1112-06, and the tire internal pressures were measured at a temperature of 21 °C under a pressure of 101.3kPa for 120 days. By the following Calculation Formula, internal pressure retentions(IPR) were measured, compared and evaluated.

[Calculation Formula]

Internal Pressure Retention (%) = internal pressure after 120 days/initial internal pressure*100

3. Measurement of Rolling Resistance (RR)

The rolling resistances of the 205R/65R16 tires manufactured using the tire inner liner films of Examples and Comparative Examples were measured under conditions of an internal pressure of 210kPa and a load of 490kgf, by the method of SAE J2452/ISO 285580. Here, with the rolling resistance measured in Comparative Example 1 as 100, the rates to the rolling resistance of Comparative Example 1 were measured and evaluated.

4. Measurement of the weight of a tire

The weights of the finished tires were measured, and the weights of the tires obtained in Examples and Comparative Examples were compared.

[Table 1] Evaluation results of tires

| | Example 1 | Example 2 | Example 3 overlap 20mm | Example 4 overlap 10mm | Example 5 : overlap 5mm | comparati ve Example 1 : NR/IIR | Comparati ve Example 2 : NR/IIR |
|---|---|---|---|---|---|---|---|
| Thickness of rubber inner liner (mm) | 1.00 | 0.62 | 1.20 | 0.62 | 1.20 | 1.20 | 0.62 |
| Measuremen t of durability Endurance TEST (%) | 101 | 98 | 99 | 98 | 82 | 100 | 98 |
| Measuremen t of durability High Speed Test (%) | 103 | 100 | 101 | 100 | 90 | 100 | 99 |
| Internal pressure before running (bar) | 2.6 | 2.0 | 2.6 | 2.5 | 2.0 | 2.5 | 1.8 |
| Internal pressure retention after 120 days (%) | 93.0 | 89.2 | 90.5 | 87.4 | 85.2 | 88.5 | 81.6 |
| Rolling resistance (%) | 98.2 | 98.5 | 97.2 | 97.3 | 97.5 | 100 | 99.2 |
| Tire weight (kg) | 10.67 | 10.34 | 10.45 | 10.14 | 10.41 | 10.80 | 10.31 |

As shown in Table 1, it was confirmed that the pneumatic tires including the inner liner films of Examples 1 to 5 may lead to weight decrease of about 0.13kg/one tire to 0.66kg/one tire, compared to the tire of Comparative Example 1, and they have relatively low rolling resistances compared to the inner liners of Comparative Examples 1 to 2.

And, it was confirmed that the pneumatic tires including the inner liner films of Examples 1 to 5 can secure internal pressure retention equivalent to or more excellent than that of Comparative Example 1, due to excellent air barrier, and particularly, have far superior internal pressure retention after 120 days.

And, in the pneumatic tires including the inner liner films of Examples 1 to 5, cracks were not generated inside even during running of an automobile or under severe strain conditions of tires, and thus, they exhibited durability equivalent to or more excellent than those of Comparative Examples 1 to 2 in Endurance Test.

And, each pneumatic tire including the inner liner films of Examples 1 to 5, although the thickness of the previous inner liner made of rubber(butyl/natural rubber, etc.) was decreased to about half, have a durability value equivalent to the tire using any inner liner of Comparative Examples 1 and 2, and simultaneously, exhibited very excellent internal pressure retention.

[Explanation to symbols]

1: Tread
11: Tread rubber
2: Shoulder
3: Sidewall
4: Cap ply
5: Belt
6: Body ply
7: Inner liner
8: APEX
9: Bead
91: Bead core

92: Bead filler
12: Side Rubber
13: Cushion rubber

## Claims

1. A pneumatic tire comprising:

   a tread (1);
   one pair of shoulders (2) respectively continued to both sides of the tread (1) with the tread (1) as a center;
   one pair of sidewalls (3) respectively continued to the shoulders (2);
   one pair of beads (9) respectively continued to the sidewalls (3);
   a body ply (6) formed on the inner side of the tread (1), shoulders (2), sidewalls (3) and beads (9);
   a belt (5) and a cap ply (4) sequentially stacked between the inner side of the tread (1) and the body ply (6); and
   an inner liner (7) bonded to the inner side of the body ply (6),
   wherein in the inner liner (7), a sheet including a rubber component is positioned at the part of the body ply (6) corresponding to the shoulders (2) and the sidewalls (3), and a polymer film including a polyamide-based component is positioned at the part of the body ply (6) corresponding to the tread (1), and
   **characterized in that** the polymer film including a polyamide-based component includes a polyamide-based resin and two or more kinds of copolymers including polyamide-based segments and polyether-based segments.

2. The pneumatic tire according to claim 1,
   wherein on the basis of the cross section of the tread (1) in the width direction,
   the polymer film including a polyamide-based component contacts with the part of the body ply (6) corresponding to the tread (1), and
   the sheet including a rubber component is stacked such that it contacts with the part of the body ply (6) corresponding to the shoulders (2) and the sidewalls (3), and one side of the polymer film including a polyamide-based component of the inward direction of the pneumatic tire.

3. The pneumatic tire according to claim 1,
   wherein on the basis of the cross section of the tread (1) in the width direction,
   the sheet including a rubber component contacts with the part of the body ply (6) corresponding to the tread (1), shoulders (2) and sidewalls (3), and
   the polymer film including a polyamide-based component is stacked on the opposite side of one side of the sheet including a rubber component that contacts with the part of the body ply (6) corresponding to the tread (1).

4. The pneumatic tire according to claim 1,
   wherein on the basis of the cross section of the tread (1) in the width direction,
   sheets including rubber components are respectively bonded to both ends of the polymer film including a polyamide-based component.

5. The pneumatic tire according to claim 4,
   wherein on the basis of the cross section of the tread (1) in the width direction,
   the overlapped length between the end of the polymer film including a polyamide-based component and the sheet including a rubber component is 10mm to 60mm.

6. The pneumatic tire according to claim 1,
   wherein the sheet including a rubber component includes one or more kinds selected from the group consisting of synthetic rubber including butyl rubber or halobutyl rubber, and natural rubber.

7. The pneumatic tire according to claim 1,
   wherein the thickness of the sheet including a rubber component is 0.1 mm to 5 mm.

8. The pneumatic tire according to claim 1,
   wherein the content of the polyether-based segments in the polymer film including a polyamide-based component is 2 wt% to 40 wt%.

9. The pneumatic tire according to claim 1, wherein the polymer film including a polyamide-based component includes the polyamide-based resin and copolymer at a weight ratio of 6:4 to 3:7.

10. The pneumatic tire according to claim 1, wherein the polymer film including a polyamide-based component has a thickness of 2$\mu$m to 400$\mu$m.

11. The pneumatic tire according to claim 1, wherein the polymer film including a polyamide-based component includes one or more compounds selected from the group consisting of olefin-based polymer, olefin-based copolymer, and olefin-based polymer or copolymer grafted with dicarboxylic acid or acid anhydride thereof.

12. The pneumatic tire according to claim 1, wherein the polymer film including a polyamide-based component is bonded to the inner side of the body ply (6) by an adhesion layer comprising a resorcinol-formalin-latex(RFL)-based adhesive, and having a thickness of 0.1 to 20 $\mu$m.

**Patentansprüche**

1. Luftreifen umfassend:

eine Lauffläche (1);
ein Paar Schultern (2), die sich jeweils zu beiden Seiten der Lauffläche (1) fortsetzen, wobei die Lauffläche (1) die Mitte darstellt;
ein Paar Seitenwände (3), die sich jeweils bis zu den Schultern (2) fortsetzen;
ein Paar Wülste (9), die sich jeweils bis zu den Seitenwänden (3) fortsetzen;
eine Karkassenlage (6), die auf der Innenseite der Lauffläche (1), der Schultern (2), der Seitenwände (3) und der Wülste (9) gebildet ist;
einen Gürtel (5) und eine oberste Karkassenlage (4), die zwischen der Innenseite der Lauffläche (1) und der Karkassenlage (6) aufeinanderfolgend geschichtet sind; und
einer Innenschicht (7), die mit der Innenseite der Karkassenlage (6) verbunden ist,
wobei in der Innenschicht (7) eine Lage, die eine Kautschukkomponente enthält, an dem Teil der Karkassenlage (6) positioniert ist, der den Schultern (2) und den Seitenwänden (3) entspricht, und ein Polymerfilm, der eine Komponente auf Polyamidbasis enthält, an dem Teil der Karkassenlage (6) positioniert ist, der der Lauffläche (1) entspricht, und
**dadurch gekennzeichnet, dass** der Polymerfilm, der eine Komponente auf Polyamidbasis enthält, ein Harz auf Polyamidbasis und zwei oder mehr Arten von Copolymeren, die Segmente auf Polyamidbasis und Segmente auf Polyetherbasis enthalten, enthält.

2. Luftreifen nach Anspruch 1, wobei auf der Basis des Querschnitts der Lauffläche (1) in der Breitenrichtung der Polymerfilm, der eine Komponente auf Polyamidbasis enthält, mit dem Teil der Karkassenlage (6), der der Lauffläche (1) entspricht, in Kontakt steht, und die Lage, die eine Kautschukkomponente enthält, so geschichtet ist, dass sie mit dem Teil der Karkassenlage (6), der den Schultern (2) und den Seitenwänden (3) entspricht, und einer Seite des Polymerfilms, der eine Komponente auf Polyamidbasis enthält, an der Innenseite des Luftreifens, in Kontakt steht.

3. Luftreifen nach Anspruch 1, wobei auf der Basis des Querschnitts der Lauffläche (1) in der Breitenrichtung die Lage, die eine Kautschukkomponente enthält, mit dem Teil der Karkassenlage (6), der der Lauffläche (1), den Schultern (2) und den Seitenwänden (3) entspricht, in Kontakt steht, und der Polymerfilm, der eine Komponente auf Polyamidbasis enthält, auf der entgegengesetzten Seite einer Seite der Lage, die eine Kautschukkomponente enthält, die mit dem Teil der Karkassenlage (6), der der Lauffläche (1) entspricht, in Kontakt steht, geschichtet ist,.

4. Luftreifen nach Anspruch 1, wobei auf der Basis des Querschnitts der Lauffläche (1) in der Breitenrichtung Lagen, die Kautschukkomponenten enthalten, jeweils an beide Enden des Polymerfilms, der eine Komponente auf Polyamidbasis enthält, gebunden sind.

5. Luftreifen nach Anspruch 4, wobei auf der Basis des Querschnitts der Lauffläche (1) in der Breitenrichtung die

Überlappungslänge zwischen dem Ende des Polymerfilms, der eine Komponente auf Polyamidbasis enthält, und der Lage, die eine Kautschukkomponente enthält, 10 mm bis 60 mm beträgt.

6. Luftreifen nach Anspruch 1, wobei die Lage, die eine Kautschukkomponente enthält, eine oder mehrere Arten, ausgewählt aus der Gruppe bestehend aus Synthesekautschuk einschließlich Butylkautschuk oder Halobutylkautschuk und Naturkautschuk enthält.

7. Luftreifen nach Anspruch 1, wobei die Dicke der Lage, die eine Kautschukkomponente umfasst, 0,1 mm bis 5 mm beträgt.

8. Luftreifen nach Anspruch 1, wobei der Gehalt der Abschnitte auf Polyetherbasis in dem Polymerfilm, der eine Komponente auf Polyamidbasis enthält, 2 Gew.-% bis 40 Gew.-% beträgt.

9. Luftreifen nach Anspruch 1, wobei der Polymerfilm, der eine Komponente auf Polyamidbasis enthält, das Harz auf Polyamidbasis und das Copolymer in einem Gewichtsverhältnis von 6:4 bis 3:7 enthält.

10. Luftreifen nach Anspruch 1, wobei der Polymerfilm, der eine Komponente auf Polyamidbasis enthält, eine Dicke von 2 $\mu$m bis 400 $\mu$m aufweist.

11. Luftreifen nach Anspruch 1, wobei der Polymerfilm, der eine Komponente auf Polyamidbasis enthält, eine oder mehrere Verbindung(en), ausgewählt aus der Gruppe bestehend aus Polymer auf Olefinbasis, Copolymer auf Olefinbasis und Polymer oder Copolymer auf Olefinbasis, gepfropft mit Dicarbonsäure oder deren Säureanhydrid, enthält.

12. Luftreifen nach Anspruch 1, wobei der Polymerfilm, der eine Komponente auf Polyamidbasis enthält, mittels einer Adhäsionsschicht, die einen Klebstoff auf Resorcin-Formalin-Latex (RFL) -Basis umfasst, an die Innenseite der Karkassenlage (6) gebunden ist und eine Dicke von 0,1 bis 20 $\mu$m aufweist.

## Revendications

1. Pneumatique comprenant :

   une bande de roulement (1) ;
   une paire d'épaulements (2) se prolongeant respectivement des deux côtés de la bande de roulement (1) avec la bande de roulement (1) comme centre ;
   une paire de flancs (3) se prolongeant respectivement jusqu'aux épaulements (2) ;
   une paire de talons (9) se prolongeant respectivement vers les flancs (3) ;
   une nappe carcasse (6) formée sur le côté intérieur de la bande de roulement (1), des épaulements (2), des flancs (3) et des talons (9) ;
   une ceinture (5) et une nappe sommet (4) empilées séquentiellement entre le côté intérieur de la bande de roulement (1) et la nappe carcasse (6) ; et
   une doublure intérieure (7) liée au côté intérieur de la nappe carcasse (6),
   dans la doublure intérieure (7), une feuille comportant un composant en caoutchouc étant positionnée au niveau de la partie de la nappe carcasse (6) correspondant aux épaulements (2) et aux flancs (3), et un film polymère comportant un composant à base de polyamide étant positionné au niveau de la partie de la nappe carcasse (6) correspondant à la bande de roulement (1), et **caractérisé en ce que** le film polymère comportant un composant à base de polyamide comporte une résine à base de polyamide et deux ou plusieurs types de copolymères comportant des segments à base de polyamide et des segments à base de polyéther.

2. Pneumatique selon la revendication 1,
   dans lequel, sur la base de la section transversale de la bande de roulement (1) dans le sens de la largeur,
   le film polymère comportant un composant à base de polyamide est en contact avec la partie de la nappe carcasse (6) correspondant à la bande de roulement (1), et
   la feuille comportant un composant en caoutchouc est empilée de telle sorte qu'elle entre en contact avec la partie de la nappe carcasse (6) correspondant aux épaulements (2) et aux flancs (3), et un côté du film polymère comportant un composant à base de polyamide de la direction vers l'intérieur du pneumatique.

3. Pneumatique selon la revendication 1,
dans lequel, sur la base de la section transversale de la bande de roulement (1) dans le sens de la largeur, la feuille comportant un composant en caoutchouc est en contact avec la partie de la nappe carcasse (6) correspondant à la bande de roulement (1), aux épaulements (2) et aux flancs (3), et
le film polymère comportant un composant à base de polyamide est empilé sur le côté opposé d'un côté de la feuille comportant un composant en caoutchouc qui entre en contact avec la partie de la nappe carcasse (6) correspondant à la bande de roulement (1).

4. Pneumatique selon la revendication 1,
dans lequel, sur la base de la section transversale de la bande de roulement (1) dans le sens de la largeur, des feuilles comportant des composants en caoutchouc sont respectivement liées aux deux extrémités du film polymère comportant un composant à base de polyamide.

5. Pneumatique selon la revendication 4,
dans lequel, sur la base de la section transversale de la bande de roulement (1) dans le sens de la largeur, la longueur chevauchée entre l'extrémité du film polymère comportant un composant à base de polyamide et la feuille comportant un composant en caoutchouc est de 10 mm à 60 mm.

6. Pneumatique selon la revendication 1,
dans lequel la feuille comportant un composant en caoutchouc comporte un ou plusieurs types choisis dans le groupe constitué de caoutchouc synthétique, dont le caoutchouc butyle ou le caoutchouc halobutyle, et le caoutchouc naturel.

7. Pneumatique selon la revendication 1,
dans lequel l'épaisseur de la feuille comportant un composant en caoutchouc est de 0,1 mm à 5 mm.

8. Pneumatique selon la revendication 1,
dans lequel la teneur en segments à base de polyéther dans le film polymère comportant un composant à base de polyamide est de 2 % en poids à 40 % en poids.

9. Pneumatique selon la revendication 1,
dans lequel le film polymère comportant un composant à base de polyamide comporte la résine et le copolymère à base de polyamide dans un rapport pondéral de 6:4 à 3:7.

10. Pneumatique selon la revendication 1,
dans lequel le film polymère comportant un composant à base de polyamide présente une épaisseur de 2 $\mu$m à 400 $\mu$m.

11. Pneumatique selon la revendication 1,
dans lequel le film polymère comportant un composant à base de polyamide comporte un ou plusieurs composés choisis dans le groupe constitué d'un polymère à base d'oléfine, d'un copolymère à base d'oléfine et d'un polymère ou copolymère à base d'oléfine greffé avec de l'acide dicarboxylique ou de l'anhydride d'acide de celui-ci.

12. Pneumatique selon la revendication 1,
dans lequel le film polymère comportant un composant à base de polyamide est lié au côté intérieur de la nappe carcasse (6) par une couche d'adhérence comprenant un adhésif à base de résorcinol-formaline-latex (RFL), et présentant une épaisseur de 0,1 à 20 $\mu$m.

[Fig 1]

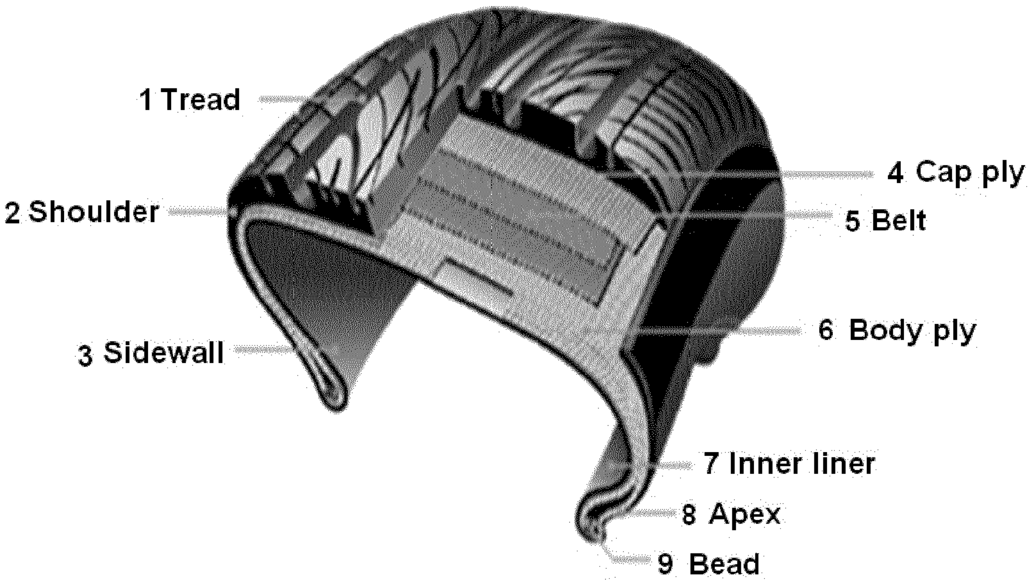
1 Tread
2 Shoulder
3 Sidewall
4 Cap ply
5 Belt
6 Body ply
7 Inner liner
8 Apex
9 Bead

[Fig 2]

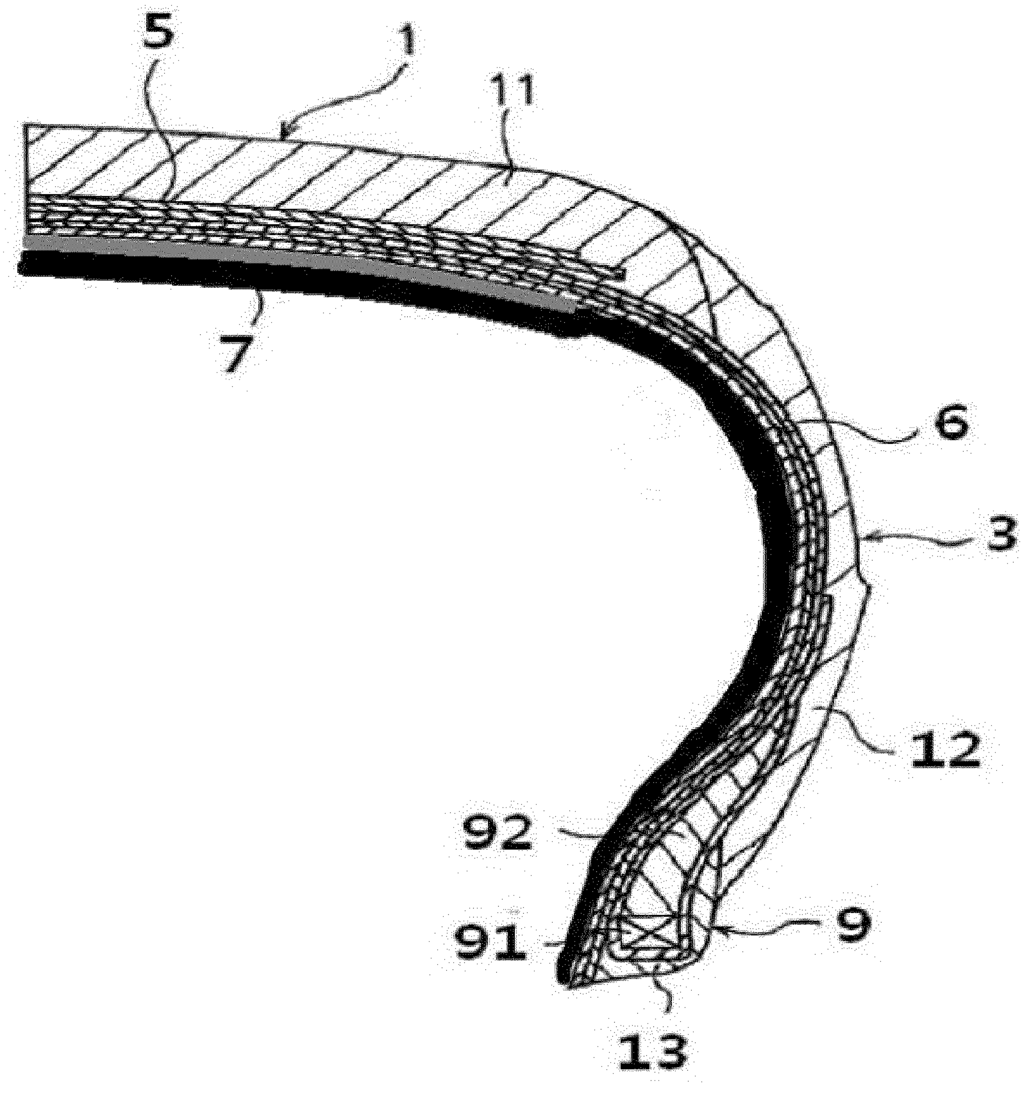

[Fig 3]